# EUROPEAN PATENT SPECIFICATION

(11) **EP 0 495 944 B1**
(45) Date of publication and mention of the grant of the patent: **06.12.1995**
(21) Application number: 91913938.6
(22) Date of filing: 24.07.1991
(51) Int. Cl.: C09J 117/00, C08J 11/20, C08J 11/06, C08J 11/10, C08J 7/02, C08J 3/12, C09D 117/00

(54) **METHOD FOR THE MANUFACTURE OF A RUBBER-CONTAINING PAINT OR ADHESIVE**
VERFAHREN ZUR HERSTELLUNG VON GUMMIHALTIGER FARBE ODER GUMMIHALTIGEM KLEBSTOFF
PROCEDE DE FABRICATION DE PEINTURE OU D'ADHESIF A PARTIR DE CAOUTCHOUC VULCANISE

(30) Priority: 26.07.1990 BR 9003626
(43) Date of publication of application: 29.07.1992
(73) Proprietor: OLIVEIRA DA CUNHA LIMA, Luiz Carlos, 22460 Rio de Janeiro (BR)
(72) Inventor: OLIVEIRA DA CUNHA LIMA, Luiz Carlos, 22460 Rio de Janeiro (BR)
(74) Representative: Kiliaridis, Constantin
(86) International application number: PCT/BR91/00014
(87) International publication number: WO 92/01760

(56) References cited:
- WO-A-86/05192
- Derwent Acession No. 68-639 51P (WPI) & JP, B, 66/11 629
- Derwent Acession No. 77-315 13Y (WPI) & JP, A, 50/98 987

## Description

The present invention is related to a process for obtaining industrial paints and adhesives having a proper coloration and being similar to vulcanised rubber when used as base prime material.

The method is based upon the use of pieces of vulcanised rubber stemming from already used rubber articles such as pneumatics, rubber scraps or other rubber sources. Articles from vulcanised rubber are produced in a system comprising free radical precursors and small particles of rubber, these particles being in mixture or in suspension in a solvent, the product thus formed being afterwards combined with fillers, oils, resins, dryers, curing agents, asphalts, etc. According to public knowledge, the adherence of the rubber in rubber containing paints and adhesives confers to the final product important and indispensable characteristics as to its application ability and its flexibility, adherence, resiliency, etc. When such requirements are necessary, the conventional technique employs generally raw rubber as an ingredient, the composition is applied to the desired substrate, and the rubber is then vulcanised or cured.

Reclaimed rubber is seldom used in the formulations of paints or adhesives. In these cases, the reclaimed rubber is incorporated merely as a filler (extender) in order to lower the costs of the final product and to facilitate its commercialisation. However, this procedure presents serious inconvenience when the product is employed in thin layers: The rubber particles render the layer rough and irregular although a smooth and homogeneous aspect is desired.

The object of the present invention is to eliminate these disadvantages and inconveniences and to provide a perfect utilisation of the beneficial characteristics of reclaimed rubber, and also to obtain a product giving smooth and homogeneous layers.

In a previous patent application No. BR-85000981, corresponding to WO 86/05192, the applicant discloses a process for the regeneration of vulcanised rubber in using the combined action of a solvent which has the ability of swelling the vulcanised rubber, and furthermore a deleterious material and/or a devulcanising agent. As swelling solvents, benzene, toluene, xylene, mixtures thereof, and cyclic or halogenated paraffinic solvents may be employed. As a deleterious material which is intended for breaking up the structure of the rubber, a metal selected from copper, manganese, iron, chromium, nickel and cobalt as well as from their alloys and derivatives may be used. Devulcanising agents are derivatives of guanidine and hydrazine. The reclaimed rubber is milled in the presence of the solvent and the deleterious material and/or the devulcanising agent, thereafter washed, dried and homogenised. The process may be carried out at normal temperature and pressure, although an increase of these parameters reduces the operational time, and it yields a regenerated rubber product having a re-usable quality.

According to the invention, a process is provided for the manufacture of a rubber containing paint or adhesive wherein vulcanised rubber is reduced to small particles, mixed with at least one swelling solvent, and combined with a paint or adhesive formulation. This process is characterised in that said rubber is submitted to a milling step in the presence of said solvent. In this way, a product is obtained in which the rubber is perfectly integrated into the solvent and which contains other components such as fillers, resins, colorants, asphalts, anti-oxidants, oils, etc.

The process is based on obtaining a reclaimed rubber from vulcanised rubber which is reduced to small particles by milling in industrial cracking mills. Scraps of tyres may be used as a starting material. These scraps may be screened on separation screens, and the particles refused may be fed again into said mill. The particles are then immersed in an appropriate swelling solvent, preferably a solvent which is used in the formulation of the paint or the adhesive. The other components mentioned above, namely oils, resins, asphalts, pigments, colorants, degraders, vulcanising agents, etc., may be added.

This mixture is then placed in a mill for homogenisation and milled, preferably in a ball mill. In this manner, the paint or the adhesive may be obtained from the mill ready for use, or the proper formulations may be made up subsequently.

The invention will now be explained in more detail by way of two Examples which should not be considered as limiting the invention thereto.

### EXAMPLE 1

A mixture comprising 1 kg of tire scraps which have been passed through a screen having 5 wires/cm, and 100 g of oil is milled in a steel ball mill made of an alloy of iron and manganese during 48 hours. The mixture from the ball mill is added to 5 kg of toluene. The mixture is then blended with 500 g of asphalt and milled until uniformity on a three-roller mill. Solvent is added to this mixture to make it fitted for painting with a pistol. The paint is applied on a properly prepared iron sheet or wood panel and yields a smooth, homogeneous and flexible surface.

### EXAMPLE 2

A mixture comprising 1 kg of tire scraps which have been passed through a screen having 5 wires/cm, and 100 g of oil is milled in a ball mill containing steel or brass balls during 30 hours, and is then added to 5 kg of trichloroethylene. 10 g of sulphur, 2 g of diphenylguanidine and 20 g of a non-reactive phenolic resin are added, and the blend is milled on a three-roller mill until uniformity. A square of a woven fabric and a sheet of polyethylene of low density were prepared, and a layer of the product obtained above was spread on the samples. The two samples were superposed, and a strong, adherent composite was formed. A cement slab was painted with the product, and a sheet of polyethylene was applied. The thus covered cement slab was found to have a total impermeability to water.

## Claims

1. A process for the manufacture of a rubber containing paint or adhesive, wherein vulcanized rubber is reduced to small particles, mixed with at least one swelling solvent and combined with a paint or adhesive formulation, characterized in that the said rubber is submitted to a milling step, in presence of the said solvent.

2. Process according to claim 1 characterized in that the said milling step is carried out in a ball mill.

3. Process according to claim 1 or claim 2 wherein the said milling step is carried out in presence of a metallic material selected among manganese, iron, steel and brass and wherein preferably the said metallic material is in form of balls.

4. Process according to anyone of claims 1, 2, 3 wherein the said swelling solvent is a solvent used for the paint or adhesive formulation.

5. Process according to anyone of claims 1 to 4, wherein the milling step is carried out in presence of diphenyl guanidine.

6. Process according to anyone of claims 1 to 5 wherein the formulation of the paint or adhesive is carried out after the milling step.

7. Process according to anyone of claims 1 to 5 wherein the formulation is carried out together with the milling step.

## Patentansprüche

1. Verfahren zur Herstellung von Gummi enthaltendem Anstrich- oder Klebemittel, wobei vulkanisierter Gummi in kleine Partikeln zerkleinert, mit wenigstens einem Quellösungsmittel gemischt und mit einer Anstrich- oder Kleberformulierung kombiniert wird, dadurch gekennzeichnet, dass der genannte Gummi in Anwesenheit des genannten Lösungsmittels einem Mahlschritt unterworfen wird.

2. Verfahren nach Anspruch 1, dadurch gekennzeichnet, dass der genannte Mahlschritt in einer Kugelmühle durchgeführt wird.

3. Verfahren nach einem der Ansprüche 1 oder 2, dadurch gekennzeichnet, dass der genannte Mahlschritt in Anwesenheit eines metallischen Materials durchgeführt wird, welches zwischen Mangan, Stahl, Eisen und Messing ausgewählt wird, und dass das genannte metallische Material vorzugsweise in Form von Kugeln verwendet wird.

4. Verfahren nach einem der Ansprüche 1 bis 3, dadurch gekennzeichnet, dass das genannte Quellösungsmittel ein Lösungsmittel ist, welches für die Anstrich- oder Kleberformulierung verwendet wird.

5. Verfahren nach einem der Ansprüche 1 bis 4, dadurch gekennzeichnet, dass der Mahlschritt in Anwesenheit von Diphenyl Guanidin durchgeführt wird.

6. Verfahren nach einem der Ansprüche 1 bis 5, dadurch gekennzeichnet, dass die Mischung gemäss der Anstrich- oder Kleberformulierung nach dem Mahlschritt durchgeführt wird.

7. Verfahren nach einem der Ansprüche 1 bis 5, dadurch gekennzeichnet, dass die Mischung gemäss Formulierung zusammen mit dem Mahlschritt durchgeführt wird.

## Revendications

1. Procédé pour la production, à partir de caoutchouc, de peinture ou d'adhésif caractérisé en ce que du caoutchouc vulcanisé est réduit en petites particules, mélangé avec au moins un seul solvant gonflant et combiné avec une formulation de peinture ou d'adhésif, caractérisé en ce que ledit caoutchouc est soumis à une étape de broyage en présence dudit solvant.

2. Procédé selon la revendication 1, caractérisé en ce que ladite étape de broyage est effectuée dans un broyeur à boulets.

3. Procédé selon l'une des revendications 1 ou 2, caractérisé en ce que ladite étape de broyage est effectuée en présence d'un matériau métallique sélectionné entre le manganèse, l'acier, le fer et le laiton, et que ledit matériau métallique est en forme de boulet.

4. Procédé selon l'une des revendications 1 à 3, caractérisé en ce que ledit solvant gonflant est un solvant utilisé pour la formulation de la peinture ou de l'adhésif.

5. Procédé selon l'une des revendications 1 à 4, caractérisé en ce que l'étape de broyage est effectuée en présence de diphényl guanidine.

6. Procédé selon l'une des revendications 1 à 5, caractérisé en ce que la formulation de peinture ou d'adhésif est effectuée après l'étape de broyage.

7. Procédé selon l'une des revendications 1 à 5, caractérisé en ce que la formulation est effectuée en même temps que l'étape de broyage.
